# EUROPÄISCHE PATENTSCHRIFT

(11) **EP 3 209 525 B1**
(45) Veröffentlichungstag und Bekanntmachung des Hinweises auf die Patenterteilung: **26.09.2018**
(21) Anmeldenummer: 15787453.8
(22) Anmeldetag: 09.10.2015
(51) Int. Cl.: B60R 21/203, B60R 21/261

(54) **GASSACKMODUL, DIFFUSOR FÜR EIN GASSACKMODUL SOWIE FAHRZEUGINSASSEN-SICHERUNGSSYSTEM**
AIRBAG MODULE, DIFFUSER FOR AN AIRBAG MODULE AND VEHICLE OCCUPANT SAFETY SYSTEM
MODULE D'AIRBAG, DIFFUSEUR POUR UN MODULE D'AIRBAG ET SYSTÈME DE SÉCURITÉ D'OCCUPANT

(30) Priorität: 23.10.2014 DE 202014008432 U
(43) Veröffentlichungstag der Anmeldung: 30.08.2017
(73) Patentinhaber: TRW Automotive Safety Systems GmbH, 63743 Aschaffenburg (DE)
(72) Erfinder: KIENZNER, Andreas, 63831 Wiesen (DE); HELMSTETTER, Matthias, 63743 Aschaffenburg (DE)
(74) Vertreter: ZF TRW Patentabteilung
(86) Internationale Anmeldenummer: PCT/EP2015/001990
(87) Internationale Veröffentlichungsnummer: WO 2016/062378

(56) Entgegenhaltungen:
- EP-A2- 1 020 332
- DE-A1-102009 006 077
- DE-C1- 10 215 330
- DE-U1-202005 020 680

## Beschreibung

Die Erfindung betrifft ein Gassackmodul für ein Fahrzeuginsassen-Sicherungssystem, umfassend einen Gassack, einen Gasgenerator sowie einen Diffusor mit einem Domabschnitt sowie einem Halteabschnitt, durch den der Gassack klemmend gehalten wird, wobei der Halteabschnitt Befestigungsöffnungen aufweist, in denen Befestigungseinrichtungen, insbesondere Befestigungsbolzen aufgenommen sind. Daneben betrifft die Erfindung ein Fahrzeuginsassen-Sicherheitssystem.

Aus DE 10 2012 004 866 A1 ist ein Airbagmodul für ein Kraftfahrzeuglenkrad mit einem Gasgenerator sowie einem Diffusor bekannt. Der Diffusor ist hutförmig ausgebildet und weist eine umgedreht becherförmige Außenwand auf, deren nach unten offenes Ende mit einer flanschartigen Erweiterung nach Art einer Hutkrempe ausgebildet ist. Öffnungen in der Hutkrempe, die in Fig. 4 der DE 10 2012 004 866 A1 erkennbar sind, dienen dazu, Befestigungsbolzen aufzunehmen, so dass ein Gassack durch die Hutkrempe (bzw. den Befestigungsflansch) klemmend gehalten werden kann. Das Airbagmodul gemäß diesem Stand der Technik ist einerseits in konstruktiver Weise vergleichsweise einfach; andererseits wird dessen Anpassung an die speziellen Erfordernisse für ein Fahrzeuginsassen-Rückhaltesystem als verbesserungswürdig angesehen. Insbesondere beansprucht das Airbagmodul gemäß dem Stand der Technik vergleichsweise viel Bauraum bzw. kann nur schwer an variierende Bedingungen angepasst werden.

Die gattungsgemäße DE 10 2009 006 077 A1 zeigt eine Gassackeinheit für ein Fahrzeuglenkrad, mit einem Gehäuse, das einen Gehäuseboden aufweist, einem in das Gehäuse eingefalteten Gassack sowie einer am Gehäuseboden gehaltenen Gasgeneratoreinheit, die einen am Gehäuseboden befestigten Befestigungsflansch sowie einen am Befestigungsflansch montierten Gasgenerator aufweist. Ferner umfasst die Gassackeinheit einen den Gasgenerator überspannenden Diffuser, der eine Berührung zwischen dem Gassack und dem Gasgenerator verhindert, wobei der Befestigungsflansch einen im Wesentlichen senkrecht zum Gehäuseboden verlaufenden Halteabschnitt aufweist, an welchem der Diffuser zum Beispiel durch eine Rast- oder Bajonettverbindung gehalten ist.

Die Aufgabe der vorliegenden Erfindung ist es, ein weiterentwickeltes Gassackmodul anzugeben, um die oben genannten Nachteile zu überwinden. Insbesondere soll ein Airbagmodul und ein Fahrzeuginsassen-Sicherungssystem vorgeschlagen werden, die an die durch den Anwendungszweck vorgegebenen Randbedingungen besser angepasst sind. Vorzugsweise soll ein Bauraum reduziert werden bzw. eine einfache Anpassung an unterschiedliche Montageumgebungen ermöglicht werden.

Erfindungsgemäß wird diese Aufgabe im Hinblick auf das Gassackmodul durch den Gegenstand gemäß Anspruch 1 und im Hinblick auf das Fahrzeuginsassen-Sicherungssystem durch den Gegenstand gemäß Anspruch 15 gelöst. Vorteilhafte und zweckmäßige Ausgestaltungen des erfindungsgemäßen Gassackmoduls sowie des Fahrzeuginsassen-Sicherungssystems sind in den Unteransprüchen angegeben.

Die oben genannte Aufgabe wird insbesondere durch ein Gassackmodul für ein Fahrzeuginsassen-Sicherungssystem gelöst, umfassend einen Gassack, einen Gasgenerator und einen Diffusor, wobei der Diffusor einen Domabschnitt sowie mindestens einen Halteabschnitt, durch den der Gassack klemmend fixierbar ist, umfasst, wobei der Halteabschnitt mindestens eine Befestigungsöffnung aufweist, in der mindestens eine Befestigungseinrichtung, insbesondere Befestigungsbolzen, aufnehmbar ist, wobei die Befestigungsöffnung unterhalb des Domabschnittes angeordnet ist.

Erfindungsgemäß sind die Befestigungsöffnungen unterhalb des Domabschnitts angeordnet. Dadurch wird gegenüber dem Stand der Technik (insbesondere der DE 10 2012 004 866 A1), bei dem die Haltebolzen und zugehörigen Befestigungsöffnungen außerhalb des Domabschnittes angeordnet werden, der Durchmesser des Gassackmoduls reduziert. Dadurch kann der zur Verfügung stehende Bauraum besser genutzt werden. Insgesamt ist der Diffusor besonders gut an die Bedingungen für ein Fahrzeuginsassen-Sicherungssystem angepasst.

Gemäß einer Ausführungsform des Gassackmoduls ist der Diffusor mindestens zweiteilig ausgebildet, wobei ein erstes Teil den Domabschnitt und ein zweites Teil (zumindest anteilig) den Halteabschnitt ausbildet. Dadurch wird ein modularer, geteilter Aufbau realisiert, so dass beispielsweise verschiedene Materialkombinationen, die an Vorgaben hinsichtlich der Belastung und Funktion des Gassackmoduls angepasst sind, realisiert werden können. Weiterhin kann den besonderen Anforderungen, insbesondere Designanforderungen, von Fahrzeugherstellern Rechnung getragen werden. Insgesamt wird auch dadurch eine vereinfachte und verbesserte Anpassung an den Einbauort des Gassackmoduls realisiert.

Unter einem "Domabschnitt" ist ein Abschnitt des Diffusors zu verstehen, der aufragt und in seinem Innenraum ein Volumen ausbildet, das (zumindest anteilig) den Gasgenerator aufnehmen kann. Der Domabschnitt bildet also einen Käfig aus, innerhalb dessen der Gasgenerator angeordnet werden kann, insbesondere schwingen kann. Der Domabschnitt ist vorzugsweise umgedreht becherförmig ausgebildet bzw. nach außen gewölbt. In Anlehnung an DE 10 2012 004 866 A1 wird der Halteabschnitt (im Stand der Technik als "flanschartige Erweiterung 125" bezeichnet) als Bestandteil des Diffusors angesehen, auch wenn die eigentlich luftleitende Funktion durch den Domabschnitt realisiert wird (analog der "umgedreht becherförmigen Außenwand 122" im Stand der Technik).

Unter einer Anordnung "unterhalb" des Domabschnittes soll insbesondere eine Anordnung verstanden werden, bei der die Befestigungsöffnungen unterhalb der Wandung des Domabschnittes angeordnet sind. Die Befestigungsöffnungen müssen also nicht zwingend unterhalb eines durch den Domabschnitt definierten Volumens angeordnet sein, sondern können auch innerhalb des durch den Domabschnitt definierten Volumens angeordnet sein. Besonders bevorzugt sind die Befestigungsöffnungen jedoch unterhalb eines durch den Domabschnitt definierten Volumens (also Innenraums des Domabschnitts) angeordnet. Im Allgemeinen bezieht sich "unterhalb" bzw. "unten" auf einen Öffnungsrand des Diffusors, der (im montierten Zustand) dem Gasgenerator zugewandt ist und durch den der Gasgenerator bei der Montage eingeführt werden kann. Projiziert man die Befestigungseinrichtung bzw. die Befestigungsöffnung auf eine Ebene, die durch den Öffnungsrand definiert wird, liegt die Befestigungseinrichtung bzw. die Befestigungsöffnung innerhalb der Fläche, die durch den Öffnungsrand definiert wird. Die Befestigungsöffnungen sind vorzugsweise oval und/oder elliptisch und/ oder rund und/oder eckig (beispielsweise viereckig) im Querschnitt. Domabschnitt und Halteabschnitt können durch einen monolithischen Körper gebildet werden. Alternativ können Domabschnitt und Halteabschnitt durch separate Teile, die jedoch miteinander in Berührung sein können, gebildet werden.

Unter einer zweiteiligen Ausführung des Diffusors soll insbesondere eine Ausbildung verstanden werden, bei der das erste Teil stofflich und/oder strukturell von dem zweiten Teil getrennt ist. Vorzugsweise berühren sich erstes und zweites Teil jedoch zumindest abschnittsweise. Das erste Teil und/oder das zweite Teil können wiederum per se als monolithische Körper ausgebildet sein, beispielsweise aus jeweils nur einem Material ausgebildet sein.

Der Domabschnitt weist vorzugsweise mindestens eine Öffnung, weiter vorzugsweise mindestens zwei Öffnungen, noch weiter vorzugsweise eine Vielzahl von Öffnungen (beispielsweise mindestens fünf oder mindestens zehn Öffnungen auf) durch die das Gas aus dem Gasgenerator strömen kann, so dass der Gassack aufgebläht werden kann. Der Halteabschnitt kann mindestens zwei Befestigungsöffnungen (und/oder Befestigungseinrichtungen), vorzugsweise mindestens drei Befestigungsöffnungen (und/oder Befestigungseinrichtungen), noch weiter vorzugsweise mindestens vier (oder mindestens sechs) Befestigungsöffnungen (und/oder Befestigungseinrichtungen) aufweisen.

Der Halteabschnitt weist vorzugsweise einen ringförmigen Abschnitt auf. In dem ringförmigen Abschnitt können die Befestigungsöffnungen angeordnet sein. Alternativ oder zusätzlich kann der ringförmige Abschnitt durch das zweite Teil gebildet werden. In jedem Fall wird durch einen derartigen Halteabschnitt bzw. ringförmigen Abschnitt ein sicheres Festhalten des Gassackes (ohne eine größere Beanspruchung von Bauraum) realisiert.

Der Diffusor und/oder der Domabschnitt und/oder der Halteabschnitt und/oder das erste Teil und/oder das zweite Teil können aus Metall und/oder Kunststoff ausgebildet sein. In einer konkreten Ausführungsform ist das erste Teil aus einem ersten Material gefertigt, das sich von einem zweiten Material des zweiten Teils unterscheidet. Beispielsweise können für das erste und das zweite Material verschiedene Metalllegierungen eingesetzt werden. Es ist auch vorstellbar, dass das erste Material ein Metall ist und das zweite Material ein Kunststoff (oder umgekehrt). Insgesamt können verschiedene Materialkombination realisiert werden, die den Anforderungen hinsichtlich der Belastung oder der Funktion des Gassackmoduls gerecht werden. Weiterhin kann auch bestimmten Designanforderungen von Kunden Rechnung getragen werden. Insgesamt wird die Variabilität erhöht.

Erstes und zweites Teil können miteinander formschlüssig und/oder stoffschlüssig und/oder kraftschlüssig verbunden sein. Es kann mindestens eine Verbindungseinrichtung vorgesehen sein, um das erste und zweite Teil miteinander zu verbinden. Eine solche Verbindungseinrichtung kann eine Schraubverbindung und/oder eine Crimpverbindung und/oder eine Clip-Verbindung umfassen. Die Verbindung kann grundsätzlich auf verschiedenste Art und Weise realisiert werden, insbesondere durch Biegen und/oder Klipsen und/oder Schrauben und/oder Schweißen und/oder Kleben und/oder Klemmen (etc.).

In einer konkreten Ausführungsform weist der Diffusor, insbesondere das erste Teil, mindestens eine Befestigungslasche auf. Die Befestigungslasche kann in der Montageposition gebogen sein. Weiterhin kann die Befestigungslasche eine Aufnahme für eine Befestigungseinrichtung, insbesondere Befestigungsbolzen, aufweisen. Das zweite Teil kann zur Verbindung von erstem und zweitem Teil einen zu der Befestigungslasche korrespondierende Öffnung, insbesondere Schlitz aufweisen, durch den die Befestigungslasche durchgeführt werden kann. Nach dem Durchführen kann die Befestigungslasche zur Fixierung von erstem und zweitem Teil gebogen werden bzw. sein. Durch eine derartige Maßnahme kann besonders einfach eine Verbindung von erstem und zweitem Teil realisiert werden.

Im montierten Zustand ist in einer konkreten Ausführungsform nur der Halteabschnitt (bzw. das zweite Teil) in (klemmendem) Kontakt mit dem Gassack. Der Gassack kann jedoch im montierten Zustand auch (lose) an dem Diffusor anliegen.

Das Gassackmodul kann ein Airbaggehäuse und/oder eine Modulkappe und/ oder einen Generatorträger umfassen. Vorzugsweise ist der Gassack zwischen dem Halteabschnitt (oder zweiten Teil) und dem Generatorträger eingeklemmt.

Das Gassackmodul kann ein, insbesondere zumindest abschnittsweise ringförmiges, Tilgerelement aufweisen. Das Tilgerelement kann mindestens ein (z.B. axial verlaufendes) Dämpfungsglied, insbesondere Tilgerfuß aufweisen. Der Halteabschnitt und/oder das zweite Teil und/oder der Ringabschnitt können mindestens eine Öffnung zur Aufnahme des Dämpfungsgliedes, insbesondere Tilgerfußes, aufweisen. Zumindest ein Abschnitt, insbesondere ein ringförmiger Tilgerelement-Abschnitt, des Tilgerelementes kann zwischen Gasgenerator und Halteelement und/oder zwischen Gasgenerator und zweitem Teil und/oder zwischen Gasgenerator und Ringabschnitt angeordnet sein.

Durch derartige Maßnahmen wird es effektiv und auf konstruktiv einfache Art und Weise ermöglicht, dass der Gasgenerator als Schwingungsdämpfermasse genutzt werden kann. Insbesondere wird eine kompakte und einfache Lösung für einen derartigen Anwendungszweck vorgeschlagen.

Der Halteabschnitt und/oder der Ringabschnitt und/oder das zweite Teil kann/können unterhalb des Gasgenerators angeordnet sein. Insbesondere kann der Gasgenerator zwischen Halteabschnitt und Domabschnitt angeordnet sein. Auch dadurch wird die Kompaktheit des Gassackmoduls weiter verbessert.

Gemäß der Erfindung sind die Befestigungslöcher (von oben betrachtet) innerhalb eines Gasgeneratorumfangs angeordnet. Auch dadurch wird die Kompaktheit der Anordnung weiter verbessert.

Die obige Aufgabe wird weiterhin durch ein Fahrzeuginsassen-Sicherungssystem, umfassend ein Gassackmodul der oben beschriebenen Art, gelöst. Die obige Aufgabe wird weiterhin gelöst durch ein Lenkrad und/oder Kraftfahrzeug, umfassend ein Gassackmodul und/oder ein Fahrzeuginsassen-Sicherungssystem der oben beschriebenen Art.

Der Diffusor bzw. das Gassackmodul bzw. das Fahrzeuginsassen-Sicherungssystem können für den Einbau in ein Lenkrad angepasst sein oder in ein Lenkrad eingebaut sein.

Grundsätzlich kann eine Bauweise des Gassackmoduls mit einem Tilgerelement realisiert sein, wobei der Gasgenerator vorzugsweise schwingend innerhalb des Diffusors gelagert ist oder ohne Tilgerelement (wobei der Gasgenerator vorzugsweise unbeweglich im Diffusor angeordnet ist). Der Gasgenerator kann di rekt an den Halteabschnitt und/oder Ringabschnitt und/oder das erste Teil oder über ein Tilgerelement daran befestigt sein. Alternativ kann der Gasgenerator an dem Domabschnitt des Diffusors befestigt werden.

Der Gassack kann mittels Wärmebehandlung formstabil gestaltet werden, wobei die folgenden Verfahrensschritt-Abfolgen zur Montage des Gassackmoduls realisiert werden können:
Bei einer ersten möglichen Anordnung kann der Generatorträger an einem Modulträger befestigt sein. Der Modulträger ist ein Bauteil des Gassackmoduls, das (z.B. mittels Schnapphaken und/oder Rastfedern) mit einer Gassackmodul-Aufnahme, insbesondere einem Lenkrad kuppelbar ist. Ein solcher Modulträger wird auch als "Generatorträger" bezeichnet.

Bei der ersten Anordnung kann weiterhin ein Tilgerelement vorgesehen sein, also ein federndes Bauteil, mit dem Gasgenerator schwingend gelagert werden kann. Das Tilgerelement kann im Allgemeinen aus Silikon mit oder ohne weitere Komponenten (z.B. Metalleinleger) ausgestaltet werden.

Die Montage kann in der folgenden Reihenfolge durchgeführt werden. Zunächst wird der Gasgenerator am Tilgerelement angeordnet, daraufhin das Tilgerelement am Modulträger und daraufhin der Diffusor am Modulträger. Eine Luftsackmontage kann in folgender Reihenfolge durchgeführt werden. Zunächst erfolgt eine Luftsack-Faltung, daraufhin eine optionale Wärmebehandlung, daraufhin wird der Luftsack in die Modulkappe eingelegt, daraufhin wird der Diffusor in den Luftsack eingelegt. Daraufhin werden Modulkappe und Modulträger verbunden und zuletzt der Diffusor am Modulträger befestigt. Die Luftsackmontage kann auch in folgender alternativer Abfolge durchgeführt werden. Zunächst wird der Domabschnitt (das erste Teil) in den Luftsack eingelegt, daraufhin erfolgt die Luftsackfaltung, daraufhin eine optionale Wärmebehandlung, daraufhin wird der Domabschnitt bzw. das erste Teil zusammen mit dem Luftsack in die Modulkappe eingelegt, daraufhin wird der Domabschnitt (das erste Teil) mit dem Halteabschnitt (dem zweiten Teil) verbunden, daraufhin werden Diffusor und Modulträger miteinander verbunden. Wichtig bei der optionalen Wärmebehandlung des Luftsackes ist es, dass der Gasgenerator nicht vor der Wärmebehandlung eingebaut wird. Bei dem Tilgerelement ist dies gegebenenfalls möglich, falls dieses hitzebeständig ist.

Eine zweite mögliche Anordnung unterscheidet sich in der Montagereihenfolge von Gasgenerator, Tilgerelement und Diffusor von der ersten Anordnung. Zunächst wird das Tilgerelement am Modulträger montiert, daraufhin der Gasgenerator am Tilgerelement und zuletzt der Diffusor am Modulträger.

Eine dritte mögliche Anordnung unterscheidet sich von der ersten Anordnung dadurch, dass kein Tilgerelement vorgesehen ist. Der Gasgenerator wird zunächst am Modulträger, daraufhin der Diffusor am Modulträger befestigt. Die Luftsackmontageabfolge ist wie bei der ersten Anordnung.

Bei einer vierten Anordnung ist wiederum ein Tilgerelement vorgesehen. Im Unterschied zur ersten Anordnung ist jedoch der Generatorträger am Domabschnitt (ersten Teil) befestigt. Der Gasgenerator wird zunächst am Tilger befestigt, daraufhin der Tilger am Domabschnitt (erstes Teil), daraufhin der Domabschnitt (das erste Teil) am Halteabschnitt (zweites Teil) und zuletzt der Diffusor (der Domabschnitt und Halteabschnitt bzw. erstes Teil und zweites Teil) am Modulträger. Die Gassackmontageabfolge kann wie bei der ersten Anordnung erfolgen.

Bei einer fünften Anordnung wird der Gasgenerator ebenfalls (wie bei der vierten Anordnung) am Domabschnitt (bzw. dem ersten Teil) befestigt. Es ist jedoch ein Tilgerelement vorgesehen. Die Montage kann in folgender Reihenfolge durchgeführt werden. Zuerst wird das Tilgerelement am Domabschnitt bzw. dem ersten Teil montiert, daraufhin der Gasgenerator am Tilgerelement, daraufhin der Domabschnitt bzw. das erste Teil am Halteabschnitt bzw. zweiten Teil, und zuletzt der Diffusor (umfassend Domabschnitt und Halteabschnitt bzw. erstes Teil und zweites Teil) am Modulträger. Die Luftsackmontage kann wie bei der ersten Anordnung durchgeführt werden.

Bei einer sechsten Anordnung kann der Gasgenerator am Halteabschnitt bzw. zweiten Teil befestigt werden. Dabei ist ein Tilgerelement vorgesehen. Die Montage kann in der folgenden Reihenfolge durchgeführt werden. Zunächst wird der Gasgenerator am Tilgerelement befestigt, daraufhin das Tilgerelement am Halteabschnitt bzw. zweiten Teil, daraufhin der Domabschnitt bzw. das erste Teil am Halteabschnitt bzw. zweiten Teil, daraufhin der Diffusor (umfassend Domabschnitt und Halteabschnitt bzw. erstes Teil und zweites Teil) am Modulträger. Die Gassackmontage kann wie bei der ersten Anordnung durchgeführt werden.

Eine siebte Anordnung unterscheidet sich von der sechsten Anordnung in der Reihenfolge der Montage. Diese kann wie folgt durchgeführt werden. Zunächst wird das Tilgerelement am Halteabschnitt bzw. zweiten Teil befestigt, daraufhin der Gasgenerator am Tilgerelement, daraufhin der Domabschnitt bzw. das erste Teil am Halteabschnitt bzw. zweiten Teil und zuletzt der Diffusor (umfassend Domabschnitt und Halteabschnitt bzw. erstes Teil und zweites Teil) am Modulträger. Die Gassackmontage kann wie bei der ersten Anordnung erfolgen.

Eine achte Anordnung unterscheidet sich von der siebten Anordnung dadurch, dass kein Tilgerelement vorgesehen ist. Der Montageschritt zur Befestigung des Tilgers am Halteabschnitt bzw. zweiten Teil entfällt damit. Ansonsten wird die Montage wie bei der siebten Anordnung durchgeführt. Auch die Gassackmontage kann wie bei der siebten bzw. ersten Anordnung durchgeführt werden.

Die Erfindung wird im Folgenden anhand von Ausführungsbeispielen unter Bezugnahme auf die beigefügten schematischen Figuren näher erläutert. Darin zeigen:
- Fig. 1:: eine erste Ausführungsform des erfindungsgemäßen Diffusors in einer ersten schematischen Schrägansicht;
- Fig. 2:: den Diffusor gemäß Fig. 1 in einer zweiten Schrägansicht;
- Fig. 3:: den Diffusor gemäß Figuren 1 und 2 in einer Explosionsdarstellung;
- Fig. 4:: Komponenten einer Ausführungsform des Gassackmoduls in einer schematischen, teilweise geschnittenen, Schrägansicht;
- Fig. 5:: Komponenten einer Ausführungsform des erfindungsgemäßen Gassackmoduls in einer ersten, schematischen Explosionsdarstellung; und
- Fig. 6:: eine zweite schematische Explosionsdarstellung der Ausführungsform gemäß Fig. 5.

Im Folgenden werden für gleiche und gleichwirkende Teile dieselben Bezugsziffern verwendet.

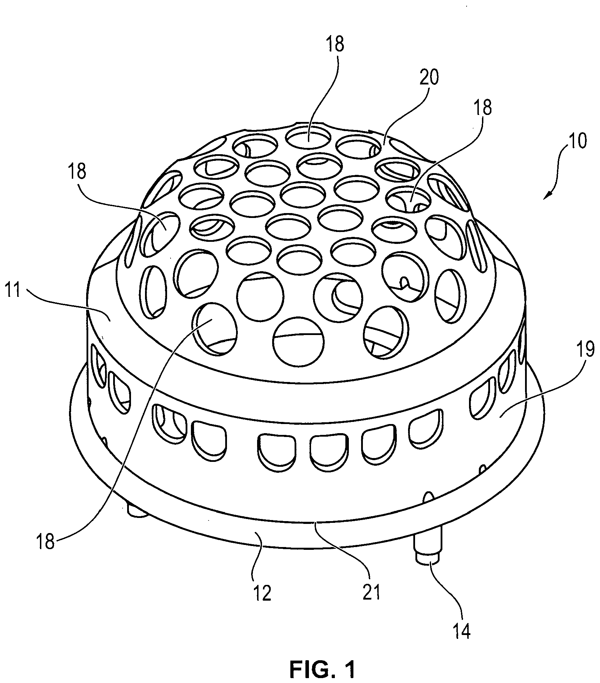

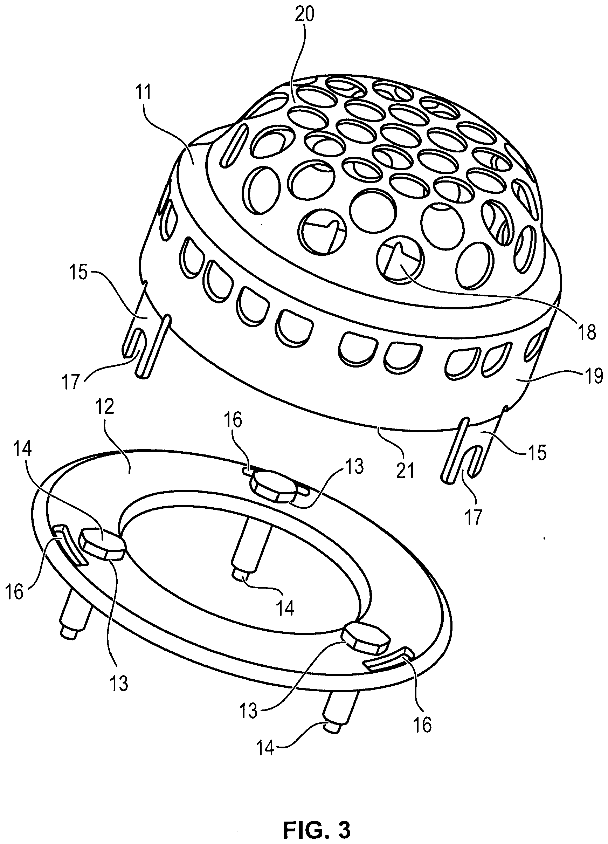

Fig. 1 zeigt einen Diffusor 10 umfassend ein erstes Teil 11 sowie ein zweites Teil 12. In Befestigungsöffnungen 13 (siehe Fig. 3) sind Befestigungsbolzen 14 angeordnet. Konkret sind drei Befestigungsbolzen 14 vorgesehen, es kann jedoch auch eine andere Anzahl von Befestigungsbolzen vorliegen.

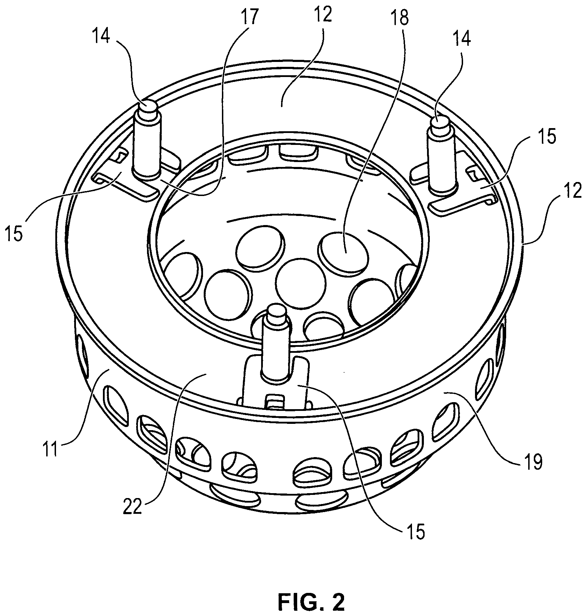

Das erste Teil 11 weist (drei) Laschen 15 (siehe Figuren 2 und 3) auf, die im montierten Zustand Schlitze 16 durchdringen (siehe Fig. 3) und zur Fixierung von ersten und zweiten Teilen aneinander umgebogen sind (siehe Fig. 2).

Die Laschen 15 bzw. Schlitze 16 sind gegenüber den Befestigungsbolzen 14 in einer radialen Richtung angeordnet und weisen Aufnahmen 17 auf, in denen die Befestigungsbolzen 14 aufgenommen werden können. Dadurch wird auf einfache Weise eine zusätzliche Sicherung der Teile 11, 12 erreicht.

Das erste Teil 11 bildet zugleich einen Domabschnitt 11 aus und wirkt als Diffusor. Dazu sind mehrere Durchströmöffnungen 18 vorgesehen, durch die das Gas zum Aufblähen eines (nicht dargestellten) Gassackes strömen kann. Der Domabschnitt 11 ist gewölbt und weist einen zylindrischen Abschnitt 19 sowie einen sich an den zylindrischen Abschnitt 19 anschließenden, verjüngenden Abschnitt 20 auf. Sowohl im zylindrischen Abschnitt 19 als auch im sich verjüngenden Abschnitt 20 sind Durchströmöffnungen 18 vorgesehen. Die Durchströmöffnungen haben im konkreten Fall entweder einen kreisförmigen Querschnitt (im zylindrischen Abschnitt 19) oder einen halb-elliptischen Querschnitt (im sich verjüngenden Abschnitt 20). Die Querschnitte können jedoch auch andere Geometrien aufweisen.

Das zweite Teil 12 ist unterhalb eines Randes 21 des ersten Teils angeordnet. Weiterhin weist das zweite Teil eine ringförmige Gestalt auf. Eine Unterseite 22 (siehe Fig. 2) des zweiten Teils 12 klemmt den (nicht gezeigten) Gassack ein (z.B. in Zusammenwirken mit einem ebenfalls nicht gezeigten Modulträger), so dass der Gassack gehalten wird. Innerhalb des Diffusors 10 kann ein (nicht gezeigter) Gasgenerator angeordnet werden.

Die Befestigungsbolzen 14 dienen der Montage des Diffusors 10 einerseits sowie der Herstellung der Klemmverbindung zwischen der Unterseite 22 und einem anliegenden Gegenstück, insbesondere Modulträger.

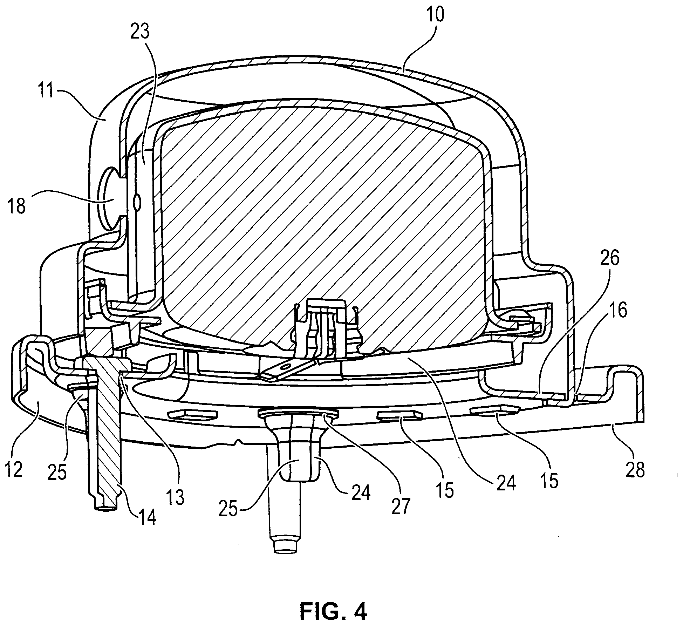

Fig. 4 zeigt Komponenten eines Gassackmoduls nach einem erfindungsgemäßen Ausführungsbeispiel, wobei sich insbesondere das erste Teil 11 von dem ersten Teil 11 gemäß Figuren 1-3 unterscheidet. Weiterhin ist in Fig. 4 ein Gasgenerator 23 erkennbar, der innerhalb des Diffusors 10 angeordnet ist. Zwischen Gasgenerator 23 und zweitem Teil 12 ist außerdem ein Tilgerelement 24 mit Tilgerfüßen 25 vorgesehen, so dass der Gasgenerator 23 schwingungsfähig gelagert ist. Die Tilgerfüße 25 sind dabei in einem (nicht gezeigten) Generatorträger bzw. Modulträger aufgenommen. Weiterhin sind auch in Fig. 4 Laschen 15 angedeutet, die zur Verbindung von erstem Teil 11 und zweitem Teil 12 (zusammen mit nicht im Detail erkennbaren Schlitzen) dienen.

Ein Querschnitt des zweiten Teils 12 gemäß Fig. 4 ist S-förmig ausgebildet. In einer (ringförmigen) Vertiefung 26 sind die Befestigungsöffnungen 13 vorgesehen.

Weiterhin umfasst das zweite Teil 12 (ebenfalls in der ringförmigen Vertiefung 26) Öffnungen 27 zur Aufnahme der Tilgerfüße 25. Die Schlitze 16 sind ebenfalls in der (ringförmigen) Vertiefung 26 angeordnet.

Weiterhin ist die Vertiefung 26 gegenüber einem (unteren) Rand 28 des zweiten Teils 12 erhöht, so dass eine Auflagefläche (Klemmfläche) durch den Rand 28 definiert wird. Zwischen dem Rand 28 und einem gegenüberliegenden Teil (insbesondere dem Modulträger) wird der (nicht gezeigte) Gassack klemmend gehalten.

In der Ausführungsform gemäß Fig. 4 (genauso wie in der Ausführungsform gemäß Figuren 1-3) sind die Befestigungsöffnungen 13 sowie die Befestigungsbolzen 14 unterhalb des ersten Teils 11 bzw. des Domabschnittes 11 angeordnet.

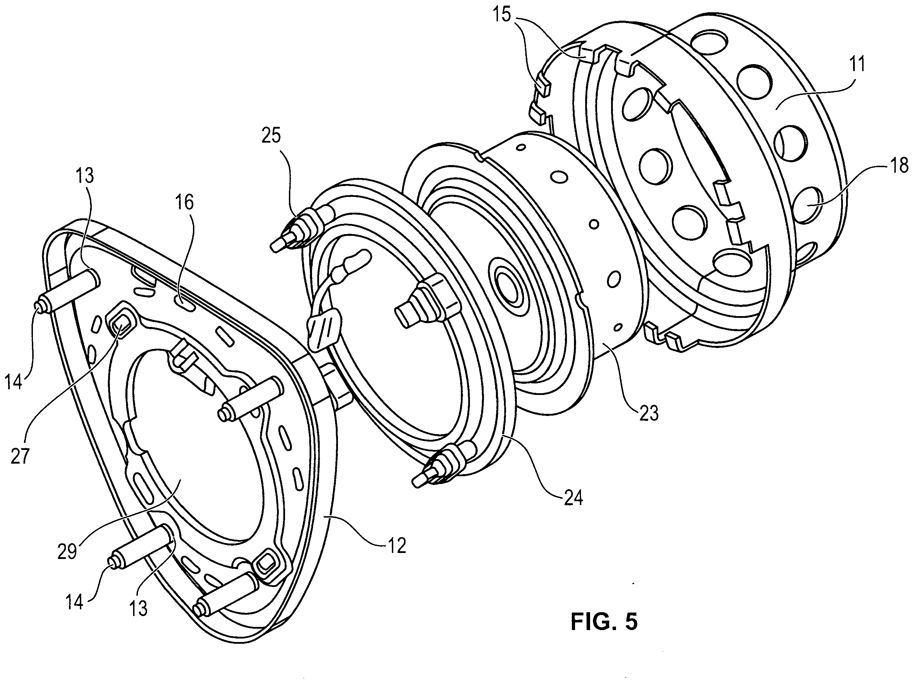

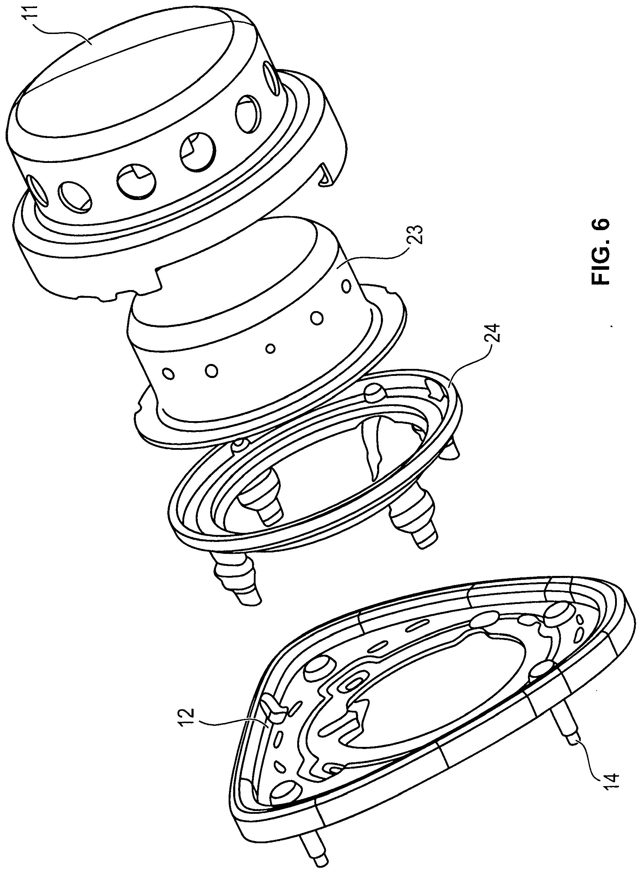

Figuren 5 und 6 zeigen eine schematische Explosionsdarstellung von Komponenten einer weiteren Ausführungsform des Gassackmoduls. Im Gegensatz zu den Ausführungsformen gemäß den Figuren 1-4 sind in der Ausführungsform gemäß den Figuren 5 und 6 die Befestigungsöffnungen 13 sowie die zugehörigen Befestigungsbolzen 14 nicht unterhalb des ersten Teils 11 bzw. des Domabschnittes 11 angeordnet, sondern außerhalb einer Projektion des ersten Teils 11 auf die Ebene, in der die Befestigungsöffnungen 13 vorgesehen sind. Die zweiteilige Ausbildung der Ausführungsformen gemäß den Figuren 5-6 des Diffusors 10 entspricht jedoch der zweiteiligen Ausführung der Ausführungsformen gemäß den Figuren 1-4.

Das zweite Teil 12 ist jedoch nicht kreis-ringförmig (wie in der Ausführungsform gemäß den Figuren 1-3 und auch Fig. 4) ausgebildet, sondern weist einen (in etwa) dreiecksförmigen Außenumfang auf, wobei Ecken des dreieckförmigen Außenumfangs abgerundet sind. Eine zentrale Öffnung 29 des zweiten Teils 12 ist kreisrund ausgebildet. Insgesamt bildet das zweite Teil einen Ring aus.

Das in Figuren 4-6 gezeigte Tilgerelement ist aus einem elastischen Material, insbesondere Silikon gefertigt. Verstärkungseinlagen (beispielsweise aus Metall) können vorgesehen sein.

Im Allgemeinen ist bei sämtlichen Ausführungsformen das zweite Teil 12 zwischen dem (nicht gezeigt) Gassack und dem ersten Teil 11 angeordnet. Der Gassack ist also nur mit dem zweiten Teil 12 in (klemmenden) Kontakt und nicht mit dem ersten Teil 11.

Es ist jedoch grundsätzlich nicht ausgeschlossen, dass auch das erste Teil 11 (beispielsweise dessen Laschen 15) in Kontakt mit dem Gassack sind.

### Bezugszeichenliste

- 10: Diffusor
- 11: erstes Teil, Domabschnitt
- 12: zweites Teil, Halteabschnitt
- 13: Befestigungsöffnung
- 14: Befestigungsbolzen
- 15: Lasche
- 16: Schlitz
- 17: Aufnahme
- 18: Durchströmöffnung
- 19: zylindrischer Abschnitt
- 20: sich verjüngender Abschnitt
- 21: Rand
- 22: Unterseite
- 23: Gasgenerator
- 24: Tilgerelement
- 25: Tilgerfuß
- 26: Vertiefung
- 27: Öffnung
- 28: Rand
- 29: Öffnung

## Patentansprüche

1. Gassackmodul für ein Fahrzeuginsassen-Sicherungssystem, umfassend einen Gassack, einen Gasgenerator (23) und einen Diffusor (10),
wobei der Diffusor (10) einen Domabschnitt (11) sowie mindestens einen Halteabschnitt (12), durch den der Gassack klemmend fixierbar ist, umfasst,
wobei der Halteabschnitt (12) mindestens eine Befestigungsöffnung (13) aufweist, in der mindestens eine Befestigungseinrichtung, insbesondere ein Befestigungsbolzen (14), aufnehmbar ist,
wobei die mindestens eine Befestigungsöffnung (13) unterhalb des Domabschnittes (11) angeordnet ist,
**dadurch gekennzeichnet, dass** die mindestens eine Befestigungsöffnung (13) innerhalb eines Gasgeneratorumfangs angeordnet ist.

2. Gassackmodul nach Anspruch 1, **dadurch gekennzeichnet, dass** der Diffusor (10) mindestens zweiteilig ausgebildet ist, wobei ein erstes Teil (11) den Domabschnitt (11) und ein zweites Teil (12), zumindest anteilig, den Halteabschnitt (12) ausbildet.

3. Gassackmodul nach Anspruch 2, **dadurch gekennzeichnet, dass** der Halteabschnitt (12) durch das zweite Teil (12) gebildet wird.

4. Gassackmodul nach Anspruch 2 oder 3, **dadurch gekennzeichnet, dass** ein erstes Material, aus dem das erste Teil (11) gefertigt ist, und ein zweites Material, aus dem das zweite Teil (12) gefertigt ist, verschieden sind, insbesondere wobei der Diffusor (10) aus Metall und/oder Kunststoff ausgebildet ist.

5. Gassackmodul nach einem der vorhergehenden Ansprüche 2 bis 4, **dadurch gekennzeichnet, dass** das erste und zweite Teil (11, 12) formschlüssig und/oder stoffschlüssig und/oder kraftschlüssig miteinander verbunden sind.

6. Gassackmodul nach einem der vorhergehenden Ansprüche 2 bis 5, **dadurch gekennzeichnet, dass** mindestens eine Verbindungseinrichtung vorgesehen ist, um das erste und zweite Teil (11, 12) miteinander zu verbinden, wobei die Verbindungseinrichtung vorzugsweise eine Schraubverbindung und/oder eine Crimpverbindung und/oder eine Clip-Verbindung umfasst.

7. Gassackmodul nach einem der vorhergehenden Ansprüche 2 bis 6, **dadurch gekennzeichnet, dass** das erste Teil (11) des Diffusors (10) mindestens eine, in der Montageposition vorzugsweise gebogene, Befestigungslasche (15) aufweist, wobei die Befestigungslasche (15) dazu ausgebildet ist, einen korrespondierenden Schlitz (16) innerhalb des zweiten Teils (12) zur Verbindung von erstem und zweitem Teil (11, 12) zu durchdringen.

8. Gassackmodul nach Anspruch 7, **dadurch gekennzeichnet, dass** Befestigungsbolzen (14) vorgesehen sind, welche sich jeweils durch eine Befestigungsöffnung (13) erstrecken, wobei die Befestigungslaschen (15) Aufnahmen (17) umfassen, in denen die Befestigungsbolzen (14) aufgenommen werden können.

9. Gassackmodul nach einem der vorhergehenden Ansprüche, **dadurch gekennzeichnet, dass** der Halteabschnitt (12) und/oder das zweite Teil (12) und/oder der Ringabschnitt mindestens eine Öffnung (27) zur Aufnahme eines Dämpfungsgliedes, insbesondere Tilgerfußes, aufweist/aufweisen.

10. Gassackmodul nach einem der vorhergehenden Ansprüche, **dadurch gekennzeichnet, dass** der Halteabschnitt (12) einen ringförmigen Abschnitt aufweist, in dem die mindestens eine Befestigungsöffnung (13) angeordnet ist.

11. Gassackmodul nach einem der vorhergehenden Ansprüche, **gekennzeichnet durch** ein oder mehrere Befestigungseinrichtungen, insbesondere Befestigungsbolzen, und/oder ein Airbaggehäuse und/oder eine Modulkappe und/oder einen Modulträger, wobei der Gassack vorzugsweise zwischen dem Halteabschnitt (12) und dem Modulträger eingeklemmt ist.

12. Gassackmodul nach einem der vorhergehenden Ansprüche, **dadurch gekennzeichnet, dass** ein, insbesondere ringförmiges, Tilgerelement (24) mit mindestens einem Dämpfungsglied, insbesondere Tilgerfuß (25), vorgesehen ist.

13. Gassackmodul nach Anspruch 12, **dadurch gekennzeichnet, dass** zumindest ein Abschnitt, insbesondere ringförmiger Abschnitt, des Tilgerelementes (24) zwischen Gasgenerator (23), einerseits, sowie Halteabschnitt (12) und/oder zweiten Teil (12) und/oder Ringabschnitt, andererseits, angeordnet ist.

14. Gassackmodul nach einem der vorhergehenden Ansprüche, **dadurch gekennzeichnet, dass** der Halteabschnitt (12) und/oder der Ringabschnitt und/oder das zweite Teil (12) unterhalb des Gasgenerators (23) angeordnet ist/sind.

15. Fahrzeuginsassen-Sicherungssystem umfassend ein Gassackmodul nach einem der vorhergehenden Ansprüche.

## Claims

1. An airbag module for a vehicle occupant safety system comprising an airbag, a gas generator (23) and a diffuser (10),
wherein the diffuser (10) comprises a dome section (11) as well as at least one retaining section (12) which can secure the airbag in a clamped manner,
wherein the retaining section (12) comprises at least one fastening opening (13) in which at least one fastening device, in particular a fastening bolt (14), can be received,
wherein the at least one fastening opening (13) is arranged below the dome section (11),
**characterized in that** the at least one fastening opening (13) is arranged inside a gas generator circumference.

2. The airbag module according to claim 1, **characterized in that** the diffuser (10) is configured in at least two parts, wherein a first part (11) forms the dome section (11) and a second part (12), at least in part, forms the retaining section (12).

3. The airbag module according to claim 2, **characterized in that** the retaining section (12) is formed by the second part (12).

4. The airbag module according to claim 2 or 3, **characterized in that** a first material from which the first part (11) is fabricated and a second material from which the second part (12) is fabricated are different, in particular wherein the diffuser (10) is made from metal and/or plastic.

5. The airbag module according to any one of the preceding claims 2 to 4, **characterized in that** the first and second part (11, 12) are positively and/or adhesively and/or non-positively connected to each other.

6. The airbag module according to any one of the preceding claims 2 to 5, **characterized in that** at least one connecting means is provided for connecting the first and second part (11, 12) with each other, wherein the connecting means preferably comprises a screwed connection and/or a crimped connection and/or a clip connection.

7. The airbag module according to any one of the preceding claims 2 to 6, **characterized in that** the first part (11) of the diffuser (10) has at least one fastening lug (15) preferably bent in the mounting position, wherein the fastening lug (15) is configured to penetrate a corresponding slit (16) inside the second part (12) for connecting the first and second part (11, 12).

8. The airbag module according to claim 7, **characterized in that** fastening bolts (14) are provided, each extending through a fastening opening (13), wherein the fastening lugs (15) comprise receptacles (17) in which the fastening bolts (14) can be received.

9. The airbag module according to any one of the preceding claims, **characterized in that** the retaining section (12) and/or the second part (12) and/or the ring section include(s) at least one opening (27) for receiving a damping member, in particular a damper foot.

10. The airbag module according to any one of the preceding claims, **characterized in that** the retaining section (12) comprises an annular section in which the at least one fastening opening (13) is arranged.

11. The airbag module according to any one of the preceding claims, **characterized by** one or more fastening means, in particular fastening bolts, and/or an airbag housing and/or a module cap and/or a module support, wherein the airbag is preferably clamped between the retaining section (12) and the module support.

12. The airbag module according to any one of the preceding claims, **characterized in that** a, in particular annular, damping element (24) is provided with at least one damping member, in particular a damping foot (25).

13. The airbag module according to claim 12, **characterized in that** at least one section, in particular an annular section, of the damping element (24) is arranged between the gas generator (23), on the one hand, as well as the retaining section (12) and/or the second part (12) and/or the ring section, on the other hand.

14. The airbag module according to any one of the preceding claims, **characterized in that** the retaining section (12) and/or the ring section and/or the second part (12) is/are arranged below the gas generator (23).

15. A vehicle occupant safety system comprising an airbag module according to any one of the preceding claims.

## Revendications

1. Module airbag pour un système de sécurité pour occupant de véhicule, comprenant un coussin gonflable, un générateur de gaz (23) et un diffuseur (10),
dans lequel le diffuseur (10) comprend une section en dôme (11) et au moins une partie de maintien (12) au moyen de laquelle le sac gonflable peut être fixé maintenu en place,
pour lequel la partie de maintien (12) comporte au moins une ouverture de fixation (13), dans laquelle peut être logé au moins un dispositif de fixation, en particulier un boulon de fixation (14),
pour lequel au moins une ouverture de fixation (13) est disposée en dessous de la section en dôme (11),
**caractérisé en ce que** au moins une ouverture de fixation (13) est disposée à l'intérieur d'une circonférence du générateur de gaz.

2. Module airbag selon la revendication 1, **caractérisé en ce que** le diffuseur (10) est formé au moins en deux parties, pour lequel une première partie (11) de la partie en dôme (11) et une seconde partie (12) forme, au moins partiellement, la partie de maintien (11).

3. Module airbag selon la revendication 2, **caractérisé en ce que** la partie de maintien (12) est formée au travers de la deuxième partie (12).

4. Module airbag selon la revendication 2 ou 3, **caractérisé en ce qu'**un premier matériau, à partir duquel est réalisée la première partie (11), et un deuxième matériau, à partir duquel est réalisée la deuxième partie (12), sont différents, en particulier pour lequel le diffuseur (10) est réalisé en métal et/ou en plastique.

5. Module airbag selon l'une des revendications précédentes 2 à 4, **caractérisé en ce que** les première et seconde parties (11, 12) sont reliées l'une à l'autre par une liaison de forme type mâle/femelle et/ou par une liaison matière et/ou par montage en force.

6. Module airbag selon l'une des revendications précédentes 2 à 5, **caractérisé en ce qu'**au moins un moyen de liaison est prévu, pour relier les première et seconde parties (11, 12) l'une à l'autre, pour lequel le moyen de liaison est de préférence une liaison par vissage et/ou une liaison par sertissage et/ou une liaison par clipsage.

7. Module airbag selon l'une des revendications précédentes 2 à 6, **caractérisé en ce que** la première partie (11) du diffuseur (10) comporte au moins une patte de fixation (15), de préférence courbée en position de montage, pour lequel la patte de fixation (15) est ainsi prévue afin de pénétrer dans une fente correspondante (16) à l'intérieur de la deuxième partie (12) pour relier les première et seconde parties (11, 12).

8. Module airbag selon la revendication 7, **caractérisé en ce que** des boulons de fixation (14) sont prévus, lesquels s'étendent chacun par une ouverture de fixation (13), pour lequel les pattes de fixation (15) comprenent des logements (17) dans lesquels peuvent être logées les vis de fixation (14).

9. Module airbag selon l'une quelconque des revendications précédentes, **caractérisé en ce que** la partie de maintien (12) et/ou la seconde partie (12) et/ou la partie annulaire comprend/comprennent au moins une ouverture (27) pour recevoir un atténuateur de vibration, en particulier un plot amortisseur.

10. Module airbag selon l'une des revendications précédentes, **caractérisé en ce que** la partie de maintien (12) comporte une partie annulaire dans laquelle est agencée la au moins une ouverture de fixation (13).

11. Module airbag selon l'une quelconque des revendications précédentes, **caractérisé par** un ou plusieurs dispositifs de fixation, en particulier des boulons de fixation, et/ou un boîtier d'airbag et/ou un couvercle de module et/ou un support de module, pour lequel le coussin gonflable est fixé serré, de préférence entre la partie de maintien (12) et le support de module.

12. Module airbag selon l'une quelconque des revendications précédentes, **caractérisé en ce qu'**un élément amortisseur (24), en particulier annulaire, est prévu avec au moins un élément d'amortissement, en particulier un plot amortisseur (25).

13. Module airbag selon la revendication 12, **caractérisé en ce qu** 'au moins une partie de l'élément amortisseur (24), en particulier une partie de forme annulaire, est disposée entre le générateur de gaz (23) d'une part, ainsi qu'entre la partie de maintien (12) et/ou la seconde partie (12) et/ou la partie annulaire d'autre part.

14. Module airbag selon l'une des revendications précédentes, **caractérisé en ce que** la partie de maintien (12) et/ou la partie annulaire et/ou la seconde partie (12) sont disposées en dessous du générateur de gaz (23).

15. Dispositif de sécurité des occupants de véhicule comprenant un module airbag selon l'une des revendications précédentes.
